# EUROPEAN PATENT SPECIFICATION

(11) **EP 4 426 661 B1**
(45) Date of publication and mention of the grant of the patent: **21.01.2026**
(21) Application number: 23773347.2
(22) Date of filing: 07.07.2023
(51) Int. Cl.: C04B 35/111, C04B 35/14, C04B 35/486, C04B 35/626, B28B 1/00, C04B 35/634

(54) **METHOD OF MANUFACTURING CERAMIC MATRIX COMPOSITES REINFORCED WITH METALLIC PARTICLES**
VERFAHREN ZUR HERSTELLUNG VON MIT METALLISCHEN PARTIKELN VERSTÄRKTEN VERBUNDWERKSTOFFEN MIT KERAMISCHER MATRIX
PROCÉDÉ DE FABRICATION DE COMPOSITES À MATRICE CÉRAMIQUE RENFORCÉS PAR DES PARTICULES MÉTALLIQUES

(30) Priority: 07.07.2022 PL 44167122
(43) Date of publication of application: 11.09.2024
(73) Proprietor: POLITECHNIKA WARSZAWSKA, 00-661 Warszawa (PL)
(72) Inventor: TANSKA, Joanna, 10-696 Olsztyn (PL); WIECINSKA, Paulina, 03-887 Warszawa (PL); MISIUKIEWICZ, Jakub, 16-120 Krynki (PL); WIECLAW-MIDOR, Anna, 03-214 Warszawa (PL); FALKOWSKI, Pawel, 05-270 Marki (PL)
(74) Representative: JWP Patent & Trademark Attorneys
(86) International application number: PCT/PL2023/050052
(87) International publication number: WO 2024/010476

(56) References cited:
- EP-A1- 2 233 449
- CN-A- 107 635 531
- CN-A- 112 209 718
- US-A- 6 117 612
- US-A1- 2010 029 801

## Description

The invention relates to a method for manufacturing ceramic matrix composites reinforced with metallic particles by stereolithography method (SLA), which belongs to 3D printing techniques.

The greatest limitation of ceramic materials is their brittleness. To solve this problem, metallic particles are introduced into the ceramic matrix to form a ceramic-metal composite. The main advantage of composites over single-phase ceramics is their higher fracture toughness, and the increase in this toughness depends on the type, quantity, size and shape of the metal particles used. The metallic phase can additionally affect the physical, mechanical and thermal properties of composite materials [M. Chmielewski, J. Dutkiewicz, D. Kalinski, L. Litynska-Dobrzynska, K. Pietrzak, A. Strojny-Nedza, "Microstructure and properties of hot-pressed molybdenum-alumina composites," Archives of Metallurgy and Materials, 57, (3), pp. 686-693, 2015].

Ceramic matrix composites reinforced with metallic particles will be referred to hereinafter as ceramic-metal composites. It should be noted, however, that in the scientific literature on the subject, metal matrix composites, reinforced with a ceramic phase in the form of particles or fibers, may also be called ceramic-metal or metal-ceramic composites. Ceramic matrix composites reinforced with metal particles, thanks to their properties, find numerous applications in various industries, e.g. in construction, transport and electronics, as anti-corrosion and thermal coatings and orthopedic implants [K. Konopka, Particle-Reinforced Ceramic Matrix Composites - Selected Examples," Journal of Composites Science , 6, (6), 2022].

There are several methods of obtaining ceramic-metal composites. One of them is the formation of ceramic-metal composites from powders. The first stage of this method is the preparation of appropriate granulates by mixing a ceramic powder with metal powders or their oxides. Then, the additive that improves the compression (binder) is added. The powder mixture is placed in a mould and compressed axially or isostatically. The last stage is sintering of green bodies. This method is popular due to the simplicity of the process, but its main limitation is the great difficulty in forming products of a complex shape and large dimensions [J. Zygmuntowicz, P. Falkowski, A. Miazga, K. Konopka, "Fabrication and characterization of ZrO2/Ni composites," Journal of the Australian Ceramic Society, 54, (4), pp. 655-662, 2018]. In addition, the use of high pressures are required and the commonly used metal dies wear out quickly.

Ceramic-metal composites can also be obtained by methods using slurries. An example of such a method is slip casting, in which a suspension of ceramic particles and metal particles in a solvent with the addition of a dispersing agent is poured into porous moulds - most often made of gypsum [M. Gizowska, K. Konopka, M. Szafran, "Properties of water-based slurries for fabrication of ceramic -metal composites by slip casting method", Archives of Metallurgy and Materials, 56, (4), pp. 1105-1110, 2011]. The solvent diffuses through the pores of the mould due to the action of capillary forces. After drying, the products are demoulded and subjected to the sintering process. The advantages of the slip casting method include the fact that it does not require use of specialized equipment, while the drawbacks are: the need to use casting moulds, long duration of the process, and non-uniform densification of the product.

Among the methods of forming ceramic materials, additive manufacturing (*AM*) methods are gaining increasing interest, as they make it possible to manufacture precise and complex elements without the use of casting moulds. Additive methods can be successfully used both in serial production and to obtain single, unique elements. Unlike conventional moulding methods (such as injection moulding, slip casting, gelcasting), the AM methods do not require production of expensive moulds. The printing process is preceded only by creating a three-dimensional model in a CAD (*computer aided design*) software, which significantly reduces the cost of producing a single element.

The most common 3D printing method is stereolithography. It consists in subjecting a ceramic dispersion containing photocurable resins to selective hardening of the surface layer by layer with the use of a light source in the ultraviolet range [F. Doreau, C. Chaput, T. Chartier, "Stereolithography for Manufacturing Ceramic Parts," Advanced Engineering Materials, 2, (8), pp. 493-496, 2000]. The individual layer curing mechanism is radical photopolymerization. Such a reaction can occur at the room temperature at a high rate, but it is prone to so-called oxygen inhibition.

Photocurable suspensions, composition of which mainly include: a ceramic powder, a solvent, a monomer or a mixture of organic monomers, a dispersing agent and a photoinitiator, are of fundamental importance in the stereolithographic printing process and must meet a number of requirements in order to successfully be employed in it. The ceramic particles must be homogeneous and evenly dispersed in the photopolymerization medium and must not sediment for a sufficiently long period, because the printing process lasts from several hours to even several days in the case of large-size products. Unstable suspensions can lead to material inhomogeneity in the fabricated parts and, consequently, to anisotropy of the finished product [M.L. Griffith, J.W. Halloran, "Freeform fabrication of ceramics via stereolithography," Journal of the American Ceramic Society, 79, (10), pp. 2601-2608, 1996]. In the case of ceramic suspensions, their rheological properties, including viscosity and yield stress, also play the key role, which is why it is very important to optimize the composition of the photocurable dispersion. On the one hand, a higher volume fraction of ceramic powder promotes lower shrinkage and higher density after sintering, and thus higher mechanical strength, while a lower powder proportion reduces viscosity of the suspension. In addition, a higher proportion of ceramic powder in the suspension reduces its cure depth, i.e. the depth to which ultraviolet radiation penetrates whilst providing enough energy to initiate the polymerization reaction. It is related to the phenomenon of light scattering by ceramic particles. Light scattering occurs when two media have different refractive indexes, RI, and differences in their values allow the scattering of a light beam to be quantified. Depending on the value of the refractive index, ceramic powders scatter UV radiation in different ways. The higher this value, the more light is scattered, resulting in a reduction in the depth of polymerization. The intensity of this phenomenon depends not only on the type of the powder and its amount, but also on the particle size. Ceramic powders of smaller sizes have a larger specific surface area, therefore, stronger scattering is observed for them [Z. Chen, Z. Li, J. Li, C. Liu, C. Lao, Y. Fu, C. Liu, Y. Li, P. Wang, Y. He, "3D printing of ceramics: A review," Journal of the European Ceramic Society, 39, (4), pp. 661-687, 2019]. In addition, a mismatch of the refractive index of the suspension and the intensity of the light used for its curing may result in a reduction in the depth of polymerization, and thus cause formation of a structure with cracks, lower mechanical strength and surface roughness. Moreover, the prepared dispersion must be homogeneous to maintain the continuity of the ceramic phase in the polymerized product. Lack of homogeneity could result in crack formation during sintering [S.A. Rasaki, D. Xiong, S. Xiong, F. Su, M. Idrees, Z. Chen, "Photopolymerization-based additive manufacturing of ceramics: A systematic review," Journal of Advanced Ceramics, 10, (3), pp. 442-471, 2021].

The publication by Bhargavi Mummaredda, et al., "The fracture properties of metal-ceramic composites manufactured via stereolithography," International Journal of Applied Ceramic Technology, 2020; 17:413-423 discloses a method for manufacturing metal-ceramic composites in a two-step process. First, the so-called ceramic preform, specifically made of a SiO₂-containing polymer resin, was obtained via stereolithography, followed by a curing and sintering phase. Then, these specimens were subjected to metal infiltration to obtain metal-ceramic composites. CN 112 209 718 discloses printing a strengthened hardening layer.

The aim of invention is to develop a method for manufacturing ceramic-metal composites with a complex shape, high density and good mechanical properties, in a singlestep forming process, from a dispersion containing both ceramic and metallic particles and without the need of employing casting moulds.

The object of invention is a method for manufacturing ceramic matrix composites reinforced with metallic particles, characterized in that it comprises the following steps: a) a solvent in an amount of 2-15 parts by weight is mixed with two organic monomers in an amount of 2-15 parts by weight each, and with a photoinitiator in an amount of 1-5 parts by weight based on the sum of the weights of organic monomers, wherein the photoinitiator is selected from the group comprising a mixture of ethyl (2,4,6-trimethylbenzoyl)phenylphosphinate and bis-(2,4,6-trimethylbenzoyl)phenylphosphine oxide, bis-(2,4,6-trimethylbenzoyl)phenylphosphine oxide and ethyl (2,4,6-trimethylbenzoyl)phenylphosphinate; b) then a dispersing agent in an amount of 0.2-5.0 parts by weight, a ceramic powder in an amount of 65-90 parts by weight, and a metal powder in an amount of 0.1-10.0 parts by weight are added and mixed again, wherein the dispersing agent is selected from the group comprising a polyester and polyamine copolymer as a 50% solution in a trichloroethylene-ethanol azeotrope, a polyester and polyamine copolymer as a 50% solution in 2-butanone; c) the resulting dispersion is mixed and deaerated; d) products are formed using a 3D stereolithographic printer in accordance with a previously prepared product design; e) the resulting products are sintered.

Preferably, the step c) is carried out twice.

Preferably, 2-ethylhexanol is used as the solvent.

Preferably, as organic monomers triethylene glycol dimethacrylate and poly(1,3-propylene glycol) dimethacrylate are used.

Preferably, the ceramic powder is selected from the group comprising : Al₂O₃, ZrO₂ and SiO₂.

More preferably, Al₂O₃ has a particle size in the range of 150 nm - 2 µm.

More preferably, ZrO₂ has a particle size in the range of 40 nm - 2 µm.

More preferably, SiO₂ has a particle size in the range of 100 nm - 1.5 µm.

Preferably, the metal powder is selected from the group comprising: nickel and molybdenum.

More preferably, the metal powder has a particle size in the range of 3-15 µm.

Preferably, the mixing is carried out in a planetary ball mill at a rotational speed of from 200 rpm to 400 rpm for from 30 to 120 minutes.

Preferably, deaeration is carried out in a high-speed homogenizer with a rotational speed of from 500 rpm to 2200 rpm for from 1 to 15 minutes.

Preferably, the printing step is carried out with the following parameters: a single layer height in the range of 0.01 mm - 0.05 mm, a base printing time in the range of 10 s - 60 s, an attaching time in the range of 10 s - 60 s, a light intensity in the range of 50 % - 100 %. Preferably, the sintering is carried out at a temperature of 1350 °C - 1650 °C in an argon-hydrogen reducing atmosphere for 1-5 h.

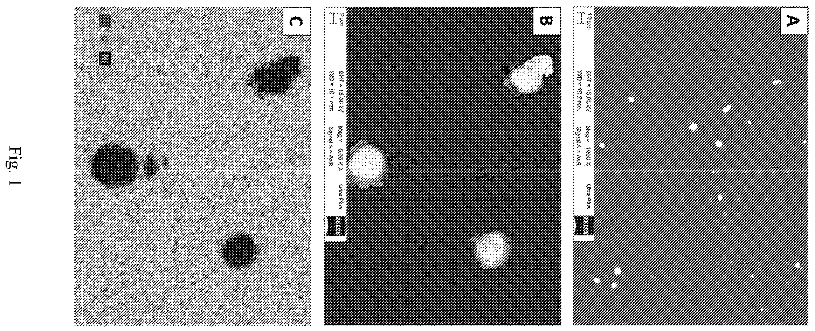

As shown in the working examples, the use of the method of 3D stereolithographic printing in the method according to the invention made it possible to obtain ceramic-metal composites with an even distribution of metallic grains in the ceramic matrix, which can be seen in the images from a scanning electron microscope with the EDS detector (Fig. 1.).

The suspensions used for forming were characterized by suitably low viscosity and yield point. Moreover, they were rheologically stable and no sedimentation was observed for them. After irradiation with a UV lamp, the dispersions have been photopolymerized, and the cure depths obtained for them were appropriate for the stereolithographic printing method.

The obtained printouts made a good representation of the previously prepared design, both in terms of the shape and size. After sintering, the products were characterized by a very good degree of compaction (nearly 100% of the theoretical density during pressureless sintering), which had a positive effect on their mechanical properties.

The invention has been illustrated in the drawing, wherein:
Fig. 1 shows images at various magnifications (A and B) from a scanning electron microscope (SEM) of an Al₂O₃-Ni composite obtained via stereolithographic 3D printing and pressureless sintering; (C) an X-ray energy dispersive spectroscopy (EDS) image confirming the presence of alumina and nickel in the composite.

The subject-matter of the invention has been presented in detail in the working examples.

### Example 1

The ceramic dispersion was prepared, in which a ceramic powder used was alumina, Al₂O₃, under the name of TM-DAR (Taimei Chemicals, Japan) with a density of 3.98 g/cm³ and an average particle size of 150 nm, in the amount of 35.82 g (which was 45 % by volume of the solid phase, equivalent to 77.18 parts by wt). The metallic phase was introduced in the form of a nickel, Ni, powder (Createc, Poland) with a density of 8.71 g/cm³ and an average particle size of 9.3 µm, in the amount of 0.8711 g. Two monomers were used: triethylene glycol dimethacrylate in the amount of 3.53 g and poly(1,3-propylene glycol) dimethacrylate in the amount of 3.53 g. In the role of the solvent, 2-ethylhexanol was used in the amount of 3.53 g, and the dispersing agent was a copolymer of polyester and polyamine under the trade name of KD1 in the form of a 50% solution in the trichloroethylene-ethanol azeotropic mixture, in the amount of 1.07 g. As the photoinitiator, 0.21 g of a compound under the trade name of Omnirad 2100, which is a mixture of ethyl (2,4,6-trimethylbenzoyl)phenylphosphinate and bis-(2,4,6-trimethylbenzoyl)phenylphosphine oxide, was used.

The mixture of the monomers, solvent and photoinitiator was mixed for 15 minutes in the Retsch PM200 planetary ball mill at 300 rpm. Then the dispersing agent, ceramic powder and metallic powder were added. The dispersion was mixed for half an hour in the mill at 300 rpm, then the mixing speed was increased to 350 rpm and mixing was continued for further 15 minutes. Then, the suspension was placed in the Thinky ARE-250 high-speed homogenizer, which was used to simultaneously mix and deaerate the suspensions. The dispersions were mixed for 2 minutes at 800 rpm and then degassed for 2 minutes at 1800 rpm to remove air bubbles. The described cycle was carried out twice. In the next step, products in the shape of a cylinder were obtained by stereolithographic printing using the FlashForge Hunter printer, which was preceded by the preparation of the design with the Autodesk Fusion 360 graphics software and the selection of printing parameters. The height of a single layer was 0.02 mm, the base printing time - 20 s, the attaching time - 30 s, the number of layers - 250, the light intensity - 65%. The samples were sintered at 1550 °C (heating rate at 5 °C/min to 1550 °C, holding at 1550 °C for 1 hour, cooling down to the room temperature at 5 °C/min) in an argon-hydrogen reducing atmosphere.

The dispersion from which the specimens were obtained was characterized by a viscosity of about 11 Pa·s at a shear rate of 1 s⁻¹; about 0.8 Pa·s at a shear rate of 50 s⁻¹ and a yield point of about 9.0 Pa, and a cure depth of 0.15 mm. The resulting parameters allowed to obtain green bodies by means of stereolithographic printing.

Homogeneous samples were obtained, which in the green state were characterized by a relative density of 63.8 %. No defects were observed on the surface of the samples. The samples after sintering were characterized by a relative density of 98.7%. The analysis of the microstructure of the samples showed that the Al₂O₃ matrix is well densified, and the nickel grains are evenly distributed in the matrix.

### Example 2

The ceramic dispersion was prepared, in which the ceramic powder used was alumina, Al₂O₃, under the name of TM-DAR (Taimei Chemicals, Japan) with a density of 3.98 g/cm³ and an average particle size of 150 nm, in the amount of 35.82 g (which was 45 % by volume the solid phase, equivalent to 77.18 parts by wt). The metallic phase was introduced in the form of a molybdenum, Mo, powder (Createc, Poland) with a density of 9.81 g/cm³ and an average particle size of 13.4 µm, in the amount of 0.9814 g. Two monomers were used: triethylene glycol dimethacrylate in the amount of 3,53 g and poly(1,3-propylene glycol) dimethacrylate in the amount of 3.53 g. In the role of the solvent, 2-ethylhexanol was used in the amount of 3.53 g, and the dispersing agent was a copolymer of polyester and polyamine under the trade name of KD1 in the form of a 50% solution in the trichloroethylene-ethanol azeotropic mixture, in the amount of 1.07 g. As the photoinitiator, 0.21 g of a compound under the trade name of Omnirad 2100, which is a mixture of ethyl (2,4,6-trimethylbenzoyl)phenylphosphinate and bis-(2,4,6-trimethylbenzoyl)phenylphosphine oxide, was used.

The mixture of the monomers, solvent and photoinitiator was mixed for 15 minutes in the Retsch PM200 planetary ball mill at 300 rpm. Then the dispersing agent, ceramic powder and metallic powder were added. The dispersion was mixed for half an hour in the mill at 300 rpm, then the mixing speed was increased to 350 rpm and mixing was continued for further 15 minutes. Then, the suspension was placed in the Thinky ARE-250 high-speed homogenizer, which was used to simultaneously mix and deaerate the suspensions. The dispersions were mixed for 2 minutes at 800 rpm and then degassed for 2 minutes at 1800 rpm to remove air bubbles. The described cycle was carried out twice. In the next step, products in the shape of a cylinder were obtained by stereolithographic printing using the FlashForge Hunter printer, which was preceded by the preparation of the design with the Autodesk Fusion 360 graphics software and the selection of printing parameters. The height of a single layer was 0.02 mm, the base printing time - 20 s, the attaching time - 30 s, the number of layers - 250, the light intensity - 65%. The specimens were sintered at 1550 °C (heating rate at 5 °C/min to 1550 °C, holding at 1550 °C for 1 hour, cooling down to the room temperature at 5 °C/min) in an argon-hydrogen reducing atmosphere.

The dispersion from which the specimens were obtained was characterized by a viscosity of about 11 Pa·s at a shear rate of 1 s⁻¹; about 0.8 Pa·s at a shear rate of 50 s⁻¹ and a yield point of about 9.5 Pa, and a cure depth of 0.17 mm. The resulting parameters allowed to obtain green products by means of stereolithographic printing.

Homogeneous samples were obtained, which in the green state were characterized by a relative density of 61.2 %. No defects were observed on the surface of the samples. The samples after sintering were characterized by a relative density of 99.6%. The analysis of the microstructure of the samples showed that the Al₂O₃ matrix is well densified, and the molybdenum grains are evenly distributed in the matrix.

### Comparative example 1

The ceramic dispersion was prepared, in which the ceramic powder used was alumina, Al₂O₃, under the name of TM-DAR (Taimei Chemicals, Japan) with a density of 3.98 g/cm³ and an average particle size of 150 nm, in the amount of 35.82 g (which was 45 % by volume the solid phase, equivalent to 77.18 parts by wt). The metallic phase was introduced in the form of a molybdenum, Mo, powder (Createc, Poland) with a density of 9.81 g/cm³ and an average particle size of 13.4 µm, in the amount of 0.9814 g. Two monomers were used: triethylene glycol dimethacrylate in the amount of 3,53 g and poly(1,3-propylene glycol) dimethacrylate in the amount of 3.53 g. In the role of the solvent, 2-ethylhexanol was used in the amount of 3.53 g, and the dispersing agent was a copolymer of polyester and polyamine under the trade name of KD1 in the form of a 50% solution in the trichloroethylene-ethanol azeotropic mixture, in the amount of 1.07 g. As the photoinitiator, 0.21 g of 2-hydroxy-4'-(2-hydroxyethoxy)-2-methylpropiophenone under the trade name of Irgacure 2959 was used.

The mixture of the monomers, solvent and photoinitiator was mixed for 15 minutes in the Retsch PM200 planetary ball mill at 300 rpm. Then the dispersing agent, ceramic powder and metallic powder were added. The dispersion was mixed for half an hour in the mill at 300 rpm, then the mixing speed was increased to 350 rpm and mixing was continued for further 15 minutes. Then, the suspension was placed in the Thinky ARE-250 high-speed homogenizer, which was used to simultaneously mix and deaerate the suspensions. The dispersions were mixed for 2 minutes at 800 rpm and then degassed for 2 minutes at 1800 rpm to remove air bubbles. The described cycle was carried out twice.

In the next step, an attempt was made to obtain products in the shape of a cylinder by means of stereolithographic printing using the FlashForge Hunter printer, which was preceded by the preparation of the design with the Autodesk Fusion 360 graphics software. After irradiating the first layer of the dispersion, it was observed that it did not harden, which prevented further 3D printing.

### Comparative example 2

The ceramic dispersion was prepared, in which the ceramic powder used was alumina, Al₂O₃, under the name of TM-DAR (Taimei Chemicals, Japan) with a density of 3.98 g/cm³ and an average particle size of 150 nm, in the amount of 35.82 g (which was 45 % by volume the solid phase, equivalent to 77.18 parts by wt). The metallic phase was introduced in the form of nickel, Ni, powder (Createc, Poland) with a density of 8.71 g/cm³ and an average particle size of 9.3 µm, in the amount of 0.8711 g. Two monomers were used: triethylene glycol dimethacrylate in the amount of 3.53 g and dimethacrylate poly (1,3-propylene glycol) in the amount of 3.53 g. In the role of the solvent, 2-ethylhexanol was used in the amount of 3.53 g, and the dispersing agent was diammonium hydrogen citrate in the amount of 0.1075 g. As the photoinitiator, 0.21 g of a compound under the trade name of Omnirad 2100, which is a mixture of ethyl (2,4,6-trimethylbenzoyl)phenylphosphinate and bis-(2,4,6-trimethylbenzoyl)phenylphosphine oxide, was used.

The mixture of the monomers, solvent and photoinitiator was mixed for 15 minutes in the Retsch PM200 planetary ball mill at 300 rpm. Then the dispersing agent, ceramic powder and metallic powder were added. The bulk was mixed for half an hour in the mill at 300 rpm, then the mixing speed was increased to 350 rpm and mixing was continued for further 15 minutes. Then, the suspension was placed in the Thinky ARE-250 high-speed homogenizer, which was used to simultaneously mix and deaerate the suspensions. The bulk was mixed for 2 minutes at 800 rpm and then degassed for 2 minutes at 1800 rpm to remove air bubbles. The described cycle was carried out twice.

In the next step, an attempt was made to obtain products in the shape of a cylinder by means of stereolithographic printing using the FlashForge Hunter printer, which was preceded by the preparation of the design with the Autodesk Fusion 360 graphics software. The suspension was characterized by too high viscosity (it had pasty consistency), preventing even filling the gap between the bottom of the cuvette and the platform on which subsequent layers of the product were formed. This prevented obtaining composite materials using the stereolithographic printing method.

### Comparative example 3

The ceramic dispersion was prepared, in which the ceramic powder used was alumina, Al₂O₃, under the name of TM-DAR (Taimei Chemicals, Japan) with a density of 3.98 g/cm³ and an average particle size of 150 nm, in the amount of 35.82 g (which was 45 % by volume the solid phase, equivalent to 77.18 parts by wt). The metallic phase was introduced in the form of a molybdenum, Mo, powder (Createc, Poland) with a density of 9.81 g/cm³ and an average particle size of 13.4 µm, in the amount of 0.9814 g. Two monomers were used: triethylene glycol dimethacrylate in the amount of 3,53 g and poly(1,3-propylene glycol) dimethacrylate in the amount of 3.53 g. In the role of the solvent, 2-ethylhexanol was used in the amount of 3.53 g, and the dispersing agent was a copolymer of polyester and polyamine under the trade name of KD1 in the form of a powder. As the photoinitiator, 0.21 g of a compound under the trade name of Omnirad 2100, which is a mixture of ethyl (2,4,6-trimethylbenzoyl)phenylphosphinate and bis-(2,4,6-trimethylbenzoyl)phenylphosphine oxide, was used.

The mixture of the monomers, solvent and photoinitiator was mixed for 15 minutes in the Retsch PM200 planetary ball mill at 300 rpm. Then the dispersing agent, ceramic powder and metallic powder were added. The dispersion was mixed for half an hour in the mill at 300 rpm, then the mixing speed was increased to 350 rpm and mixing was continued for further 15 minutes. Then, the suspension was placed in the Thinky ARE-250 high-speed homogenizer, which was used to simultaneously mix and deaerate the suspensions. The dispersion was mixed for 2 minutes at 800 rpm and then degassed for 2 minutes at 1800 rpm to remove air bubbles. The described cycle was carried out twice.

In the next step, an attempt was made to obtain products in the shape of a cylinder by means of stereolithographic printing using the FlashForge Hunter printer, which was preceded by the preparation of the design with the Autodesk Fusion 360 graphics software. The suspension was characterized by too high viscosity (it had pasty consistency), preventing even filling the gap between the bottom of the cuvette and the platform on which subsequent layers of the product were formed. This prevented obtaining composite materials using the stereolithographic printing method.

## Claims

1. A method for manufacturing ceramic matrix composites reinforced with metallic particles, **characterized in that** it comprises the following steps:
a) a solvent in an amount of 2-15 parts by weight is mixed with two organic monomers in an amount of 2-15 parts by weight each, and with a photoinitiator in an amount of 1-5 parts by weight based on the sum of the weights of organic monomers, wherein the photoinitiator is selected from the group comprising: a mixture of ethyl (2,4,6-trimethylbenzoyl)phenylphosphinate and bis-(2,4,6-trimethylbenzoyl)phenylphosphine oxide, bis-(2,4,6-trimethylbenzoyl)phenylphosphine oxide and ethyl (2,4,6-trimethylbenzoyl)phenylphosphinate;
b) then a dispersing agent in an amount of 0.2-5.0 parts by weight, a ceramic powder in an amount of 65-90 parts by weight, and a metal powder in an amount of 0.1-10.0 parts by weight are added and mixed again, wherein the dispersing agent is selected from the group comprising a polyester and polyamine copolymer as a 50% solution in a trichlorethyleneethanol azeotrope, a polyester and polyamine copolymer as a 50% solution in 2-butanone;
c) the resulting dispersion is mixed and deaerated;
d) products are formed using a 3D stereolithographic printer;
e) the resulting products are sintered.

2. The method according to claim 1, **characterized in that** the step c) is carried out twice.

3. The method according to claim 1, **characterized in that** as the solvent 2-ethylhexanol is used.

4. The method according to claim 1, **characterized in that** as the organic monomers triethylene glycol dimethacrylate and poly(1,3-propylene glycol) dimethacrylate are used.

5. The method according to claim 1, **characterized in that** the ceramic powder is selected from the group comprising: Al₂O₃, ZrO₂ and SiO₂.

6. The method according to claim 1, **characterized in that** the metal powder is selected from the group comprising: nickel and molybdenum.

7. The method according to claim 1, **characterized in that** the mixing is carried out in a planetary ball mill at a rotational speed of from 200 rpm to 400 rpm for from 30 to 120 minutes.

8. The method according to claim 1, **characterized in that** the deaeration is carried out in a high-speed homogenizer with a rotational speed of from 500 rpm to 2200 rpm for from 1 to 15 minutes.

9. The method according to claim 1, **characterized in that** the printing step is carried out with the following parameters: a single layer height in the range of 0.01 mm - 0.05 mm, a base printing time in the range of 10 s - 60 s, an attaching time in the range of 10 s - 60 s, a light intensity in the range of 50 % - 100 %.

10. The method according to claim 1, **characterized in that** the sintering is carried out at a temperature of 1350 °C - 1650 °C in an argon-hydrogen reducing atmosphere for 1-5 h.

## Patentansprüche

1. Das Verfahren zur Herstellung von keramischen Matrixverbundwerkstoffen, die mit metallischen Partikeln verstärkt sind, **dadurch gekennzeichnet, dass** es die folgenden Schritte umfasst:
a) ein Lösungsmittel, das in einer Menge von 2-15 Gewichtsteilen mit zwei organischen Monomeren in einer Menge von jeweils 2-15 Gewichtsteilen und einem Photoinitiator in einer Menge von 1-5 Gewichtsteilen, bezogen auf die Summe der Gewichte der organischen Monomere, vermischt wird, wobei der Photoinitiator aus der Gruppe ausgewählt ist, die: eine Mischung aus Ethyl- (2,4,6-trimethylbenzoyl) -phenylphosphinat und Bis-(2,4,6-trimethylbenzoyl) -phenylphosphinoxid, Bis-(2,4,6-trimethylbenzoyl) - phenylphosphinoxid und Ethyl- (2,4,6-trimethylbenzoyl)-phenylphosphinat umfassen;
b) dann ein Dispergiermittel in einer Menge von 0,2-5,0 Gewichtsteilen, ein Keramikpulver in einer Menge von 65-90 Gewichtsteilen und ein Metallpulver in einer Menge von 0,1-10,0 Gewichtsteilen, die zugegeben und erneut gemischt werden, wobei das Dispergiermittel aus der Gruppe ausgewählt ist, die ein Polyester- und Polyamin-Copolymer als 50 %-ige Lösung in einem Trichlorethylen-Ethanol-Azeotrop, ein Polyester- und Polyamin-Copolymer als 50 %-ige Lösung in 2-Butanon umfassen;
c) die resultierende Dispersion, die gemischt und entlüftet wird;
d) Produkte, die mit einem stereolithografischen 3D-Drucker hergestellt werden;
e) die resultierenden Produkte, die gesintert werden.

2. Das Verfahren nach Anspruch 1, **dadurch gekennzeichnet, dass** der Schritt c) zweimal durchgeführt wird.

3. Das Verfahren nach Anspruch 1, **dadurch gekennzeichnet, dass** als Lösungsmittel 2-Ethylhexanol verwendet wird.

4. Das Verfahren nach Anspruch 1, **dadurch gekennzeichnet, dass** als die organischen Monomere Triethylenglykoldimethacrylat und Poly(1,3-propylenglykol) dimethacrylat verwendet werden.

5. Das Verfahren nach Anspruch 1, **dadurch gekennzeichnet, dass** das Keramikpulver aus der Gruppe ausgewählt ist, die: Al₂O₃, ZrO₂ und SiO₂ umfassen.

6. Das Verfahren nach Anspruch 1, **dadurch gekennzeichnet, dass** das Metallpulver aus der Gruppe ausgewählt ist, die Nickel und Molybdän umfassen.

7. Das Verfahren nach Anspruch 1, **dadurch gekennzeichnet, dass** das Mischen in einer Planetenkugelmühle bei einer Drehzahl von 200 U/min bis 400 U/min für 30 bis 120 Minuten durchgeführt wird.

8. Das Verfahren nach Anspruch 1, **dadurch gekennzeichnet, dass** die Entlüftung in einem Hochgeschwindigkeitshomogenisator mit einer Drehzahl von 500 U/min bis 2200 U/min für 1 bis 15 Minuten durchgeführt wird.

9. Das Verfahren nach Anspruch 1, **dadurch gekennzeichnet, dass** der Druckschritt mit den folgenden Parametern durchgeführt wird: eine Einzelschichthöhe im Bereich von 0,01 mm - 0,05 mm, eine Basisdruckzeit im Bereich von 10 s - 60 s, eine Anbringungszeit im Bereich von 10 s - 60 s, eine Lichtintensität im Bereich von 50 % - 100 %.

10. Das Verfahren nach Anspruch 1, **dadurch gekennzeichnet, dass** das Sintern bei einer Temperatur von 1350 °C - 1650 °C in einer Argon-Wasserstoff reduzierenden Atmosphäre für 1-5 h durchgeführt wird.

## Revendications

1. Procédé de fabrication des composites à matrice céramique renforcés par particules métalliques, **caractérisé en ce qu'**il comprend les étapes suivantes :
a) un solvant à raison de 2-15 parties en poids est mélangé avec deux monomères organiques à raison de 2-15 parties en poids chacun, et avec un photo-initiateur à raison de 1-5 parties en poids par rapport à la somme des poids des monomères organiques, dans laquelle le photo-initiateur est choisi dans le groupe comprenant : un mélange de (2,4,6-triméthylbenzoyl)phénylphosphinate d'éthyl et l'oxyde de bis-(2,4,6-triméthylbenzoyl)phénylphosphine, l'oxyde de bis-(2,4,6-triméthylbenzoyl)phénylphosphine et (2,4,6-triméthylbenzoyl)phénylphosphinate d'éthyl ;
b) ensuite un agent de dispersion à raison de 0.2-5.0 parties en poids, une poudre de céramique à raison de 65-90 parties en poids, et une poudre métallique à raison de 0.1-10.0 parties en poids sont ajoutés et mélangés encore, l'agent de dispersion étant choisi dans le groupe comprenant le copolymère de polyester et de polyamine en tant qu'une solution à 50% dans un azéotrope de l'éthanol de trichloroéthylène, le copolymère de polyester et de polyamine en tant qu'une solution à 50% dans le 2-butanone ;
c) la dispersion obtenue est mélangée et désaérée ;
d) produits sont formés en utilisant une imprimante à stéréolithographie 3D ;
e) des produits obtenus sont frittés.

2. Procédé selon la revendication 1, **caractérisé en ce que** l'étape c) est effectuée deux fois.

3. Procédé selon la revendication 1, **caractérisé en ce que** le 2-éthylhexanol est utilisé en tant que le solvant.

4. Procédé selon la revendication 1, **caractérisé en ce que** le dimethacrylate de poly(1,3-propylèneglycol) et le dimethacrylate de triéthylèneglycol sont utilisés en tant que des monomères organiques.

5. Procédé selon la revendication 1, **caractérisé en ce que** la poudre céramique est choisie dans le groupe comprenant : AI₂O₃, ZrO₂ et SiO₂.

6. Procédé selon la revendication 1, **caractérisé en ce que** la poudre métallique est choisie dans le groupe comprenant : nickel et molybdène.

7. Procédé selon la revendication 1, **caractérisé en ce que** le mélange est effectué dans un broyeur planétaire à boulets avec une vitesse de rotation de 200 tr/min à 400 tr/min pendant de 30 à 120 minutes.

8. Procédé selon la revendication 1, **caractérisé en ce que** la désaération est effectuée dans un homogénéisateur à grande vitesse avec une vitesse de rotation de 500 tr/min à 2200 tr/min pendant de 1 à 15 minutes.

9. Procédé selon la revendication 1, **caractérisé en ce que** l'étape d'impression est effectuée avec des paramètres suivantes : hauteur de couche individuelle est comprise entre 0.01 mm - 0.05 mm, temps d'impression de base est compris entre 10 seconds - 60 seconds, temps de fixation est compris entre 10 seconds - 60 seconds, l'intensité lumineuse est comprise entre 50% - 100%.

10. Procédé selon la revendication 1, **caractérisé en ce que** le frittage est effectué à une température de 1350°C-1650°C sous atmosphère réductrice d'argon-hydrogène pendant 1-5 heures.
